# NEW EUROPEAN PATENT SPECIFICATION

(11) **EP 3 791 066 B2**
(45) Date of publication and mention of the opposition decision: **07.05.2025**
(45) Mention of the grant of the patent: 15.06.2022
(21) Application number: 19739892.8
(22) Date of filing: 25.06.2019
(51) Int. Cl.: F03D 80/50

(54) **INFLATABLE COMPONENT FOR SERVICE OR INSTALLATION OF A WIND TURBINE MODULE**
AUFBLASBARE KOMPONENTE ZUR WARTUNG ODER INSTALLATION EINES WINDTURBINENMODULS
COMPOSANT GONFLABLE POUR SERVICE OU INSTALLATION D'UN MODULE DE TURBINE ÉOLIENNE

(30) Priority: 25.06.2018 EP 18179612
(43) Date of publication of application: 17.03.2021
(73) Proprietor: Siemens Gamesa Renewable Energy A/S, 7330 Brande (DK)
(72) Inventor: ANDERSEN, Erik Dahl, 7480 Vildbjerg (DK)
(74) Representative: SGRE-Association
(86) International application number: PCT/EP2019/066741
(87) International publication number: WO 2020/002278

(56) References cited:
- EP-A1- 2 908 002
- WO-A1-2017/103308
- WO-A2-2010/051817
- RU-C2- 2 267 690
- US-A1- 2013 164 144

## Description

### FIELD OF THE INVENTION

The invention relates to the field of servicing or installation of wind turbines.

### BACKGROUND OF THE INVENTION

When servicing a wind turbine, but also during initial installation or erection of a wind turbine, technician will execute work at components of wind turbines. These components may be wind turbine blades or other components of the wind turbine, like the tower or the hub. The components may be positioned on the ground or on a vessel decoupled from the wind turbine or may already be part of the erected wind turbine. As a further option the components, like a blade, may be decoupled temporarily from the erected wind turbine and may hang from a crane.

During the work, harsh weather conditions like rain, wind, snow, or extreme temperatures may be experienced, for example in at an offshore installation. As a result of the harsh weather conditions the temperature may not be accurate for the repair work process.

In other regional locations, the air may comprise a lot of particles like dust. Further on, the technician may execute work that also creates particles or debris while performing the work. Uncontrolled accumulation of such particles inside the serviced component is also unwanted.

According to patent RU 2 267 690 C2 which is directed to the different field of pipeline inspection of a pipeline for transporting gas or liquid, a solid component can be positioned info a hollow pipeline. This solid component as an inflatable torus-like section at its cylindrical circumference for sealing the pipeline once inflated.

Patent application WO 2017/103308 A1 illustrates, during the production of a wind turbine blade, to use a flexible wall cover with an inflatable chamber. The goal is to compact a sheath of a wind turbine blade during manufacturing of the blade.

### SUMMARY OF THE INVENTION

The present invention seeks to address these problems and mitigate related drawbacks.

This objective is achieved by the independent claims. The dependent claims describe advantageous developments and modifications of the invention.

In accordance with the invention there is provided an inflatable component usable during service and/or installation of a wind turbine module. The inflatable component comprises an inflation structure with an air tight shell and a sealable passage in the inflation structure for ingress or discharge of air into or from the shell for inflating or deflating the inflation structure. The inflation structure is dimensioned to provide a thermal and/or physical barrier in respect of external fluids and/or physical objects or particles acting upon the inflation structure in case the inflation structure is inflated and inserted in a hollow section of the wind turbine module. The inflatable component is built substantially from a deformable material.

The wind turbine module is a wind turbine blade.

The inflatable component provides the advantage, for example if a wind turbine module like a blade is arranged horizontally on a jack-up vessel for service and repair, that rain, wind, or snow may be blocked to not affect the inside of the hollow blade, which may lead to the advantage that the right temperature which is needed for the repair of the blade can be maintained or configured.

Blade work outside the blade can be performed because the inflatable component is preventing undercooling from the inside.

If in another example the blade is arranged vertically hanging, for example, from a crane while being detached from the wind turbine, that dust or particles that may be created during the work, but also rain and snow, cannot enter the inside of the hollow blade beyond the inflatable component which acts as a seal and also as a collector for falling objects, dust or particles. Also lost tools that may be dropped during maintenance work inside the blade, which would cause damage of the blade, can be withheld at the inflatable component.

Overall a faster and safer environment for the work performed on the blade can be provided.

The inflatable component may keep the blade root area free and uncovered for work on the blade root and root terminals as it may be placed behind those. This is advantageous compared to a cover which could alternatively be placed over the root end of the blade. Similarily for other wind turbine modules it may also be advantageous to be able to access one region of the module without obstruction but to have the inflatable component positioned inside the wind turbine module.

Further, during in-situ repair the wind turbine operator can be ensured that no technicians, parts, tools or dust are entering the blade or the wind turbine module. Furthermore, the inflatable component is configured to provide a working platform for persons in case the inflation structure is inflated, inserted in a hollow section of the wind turbine module, and arranged horizontally.

In an embodiment the air tight shell may comprise an air tight inner shell and an outer shell surrounding the inner shell, the outer shell being of a material to protect against puncture of the inner shell. Thus a double shell structure or a bag in bag solution is provided.

The inner shell may be an inflatable structure of the inflatable component, i.e. a balloon or a bladder. The outer shell may be arranged to protect from any risk related to puncture of the inner inflatable structure.

In another exemplary embodiment the inflatable component may be sized and shaped to fit the hollow section of the wind turbine module such that, in case the inflation structure is inflated and inserted in a hollow section of the wind turbine module, a first surface structure of the inflatable component and a second surface structure of the hollow section of the wind turbine module are in fluid tight contact to limit or block a fluid leakage in between.

The inflatable component is built substantially from a deformable material. By this it is understood that the inflatable component may be built substantially from a flexible and/or bendable and/or pliable material. It may be collapsible when deflated and will transform its form by inflation.

The inflatable component may be free of a solid frame - i.e. the inflatable component may be frameless - or free of a solid supporting structure. Thus the inflatable component may be free of metal struts. To illustrate this design, it may have a vague similarity to a structure of a rubber boat, but little similarity to a bicycle tube, as a bicycle tube requires a solid rim to be placed on.

The inflatable component may be formed substantially in form of an elliptical cylinder, an ellipsoid or an ovoid, but not in form of a torus.

Thus the inflatable component provides sealing. For example to prevent wind entering the blade the inflatable component acting as a "balloon", will be blown up and fill the area and prevent wind, rain or snow to pass further into the blade, for example if the blade is arranged horizontally.

As the inflatable component being inflated it seals the inside of the wind turbine blade, and it blocks, particularly if the blade is arranged vertically, loose parts, dust, etc. to proceed further down into the blade. The inserted inflatable component will result in that loose parts may lay at the side of the inflatable component so that these can be removed or collected afterwards in an easy manner.

The inflatable component may be a pre-formed component to match the inner shape of the hollow section.

In a further configuration the sealable passage may comprise a valve to control the fluid pressure inside the inflatable structure.

In another embodiment the air tight shell may be built of several air compartments. This may provide additional stability.

In a configuration with several compartments it may be provided with individual valves for each compartment and the compartments may not be fluidically connected to another. Thus puncturing of one compartment would not cause collapse of overall inflatable component.

In an additional embodiment the inflatable component may further comprise a plurality of securing members via which the inflatable component is positioned and held in place in case the inflation structure inserted in a hollow section of the wind turbine module and inflated. Hooks may be attached to the outer shell. Ropes or strings may be used to connect to the hooks and further to the wind turbine module.

Thus, hooks may be attached to the inflatable component, particularly to the outer shell, to be able to connect the inflatable component to the wind turbine module.

It is also be advantageous that the inflatable component may be a portable component in case the inflation structure is deflated.

The inflatable component may be the primary working platform for service personnel and a safety plane in case the service personnel, who is primarily connected via strings, may drop.

In consequence the inflatable component may be used during an in-situ repair of the blade root, preventing tools and dust from entering the blade when hanging downwards (vertical), and at the same time act as a wind turbine inflatable platform as safety for the technician working in the blade or other wind turbine modules.

The invention is also directed to a wind turbine arrangement according to claim 8. In such an arrangement the inflatable component is positioned and inflated inside a hollow section of the wind turbine blade for service and/or installation of a wind turbine blade.

Further on the invention is also directed to a servicing or installation method according to claim 9.

For work on a wind turbine blade for which work is to be performed in horizontal orientation of the wind turbine blade , the method may also comprise these initial steps: decoupling the wind turbine blade from a wind turbine installation; and orienting the wind turbine blade in horizontal orientation. The step of inserting the inflatable component may then be performed while orienting the inflatable component vertically inside the hollow section, such that the inflatable component may provide the barrier for a horizontal movement of the external fluid or of the external physical objects or particles.

In case of service or installation work of a vertically arranged module, the additional method steps are similar:
first decoupling the wind turbine module from a wind turbine installation; and orienting the wind turbine module in vertical orientation. The step of inserting the inflatable component may then be performed while orienting the inflatable component horizontally inside the hollow section, such that the inflatable component may provide the barrier for a vertical movement of the external fluid or of the external physical objects or particles.

To secure the inflatable component, the inflatable component may be connected by strings and/or wires to the wind turbine module. The inflatable component may stay connected throughout the servicing or installation work.

As a further option, particularly in case of harsh temperature conditions, the work may be performed while applying heat inside wind turbine module.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Furthermore examples have been and will be disclosed in the following sections by reference to wind turbine blades. The invention is also applicable for any type of wind turbine module, e.g. tower or hub. Furthermore the general concept can be applied to rotating parts as well as stationary parts when the wind turbine is operating after the servicing or installation work has ended.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- FIG. 1:: shows schematically a blade of a wind turbine in which an inventive inflatable component is placed;
- FIG. 2:: illustrates in a cross sectional view an inserted inflatable component in a hollow wind turbine module;
- FIG. 3:: illustrates in a cross sectional view a double shell structure of the inflatable component;
- FIG. 4:: illustrates in a cross sectional view a multi compartment structure of the inflatable component;
- FIG. 5:: shows schematically a three bladed wind turbine in which an inflatable component is inserted;
- FIG. 6:: shows schematically a semi inflated inflatable component.

The illustration in the drawing is schematical. It is noted that for similar or identical elements in different figures, the same reference signs will be used.

### DETAILED DESCRIPTION OF THE INVENTION

In horizontal position for blade work a tent and heaters are often used to controlling the outside temperature of the blade surface or other components where used, but the tent does not cover the complete blade and the wind can enter in the root end and cool down the blade from the inside avoiding correct temperature for repair work. This can be improved by using an inflatable component which can be inserted into the hollow section of the blade.

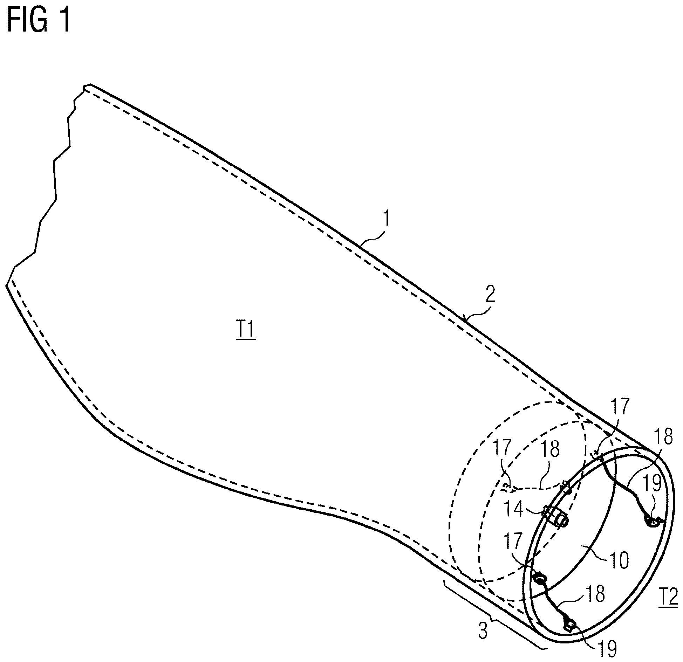

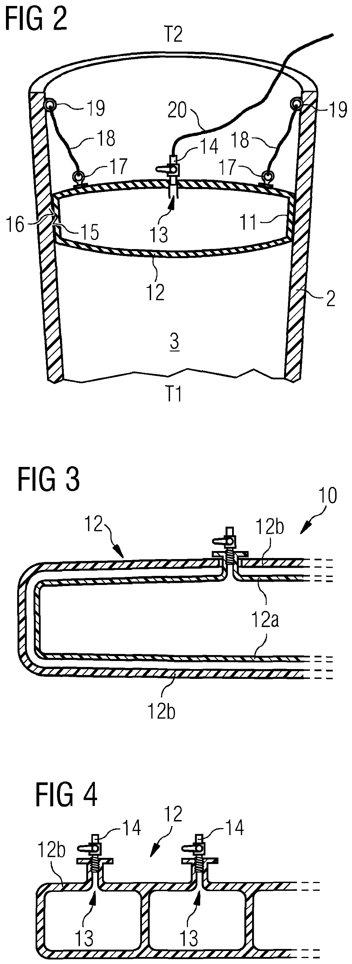

Referring now to FIG. 1 (with additional reference to FIG. 2), a blade 1 is shown as a wind turbine module which is detached from the wind turbine for service. The blade 1 is a hollow component with the blade wall 2. At a root end of the blade 1 a hollow root section 3 is located.

During service, as shown in FIG.1 and 2, an inflatable component 10 may be inserted into the hollow root section 3 of blade 1. The inflatable component 10 comprises further an inflation structure 11 with an air tight shell 12, which is illustrated in FIG.2. The inflation structure 11 can be inflated with air or another gaseous fluid and later also deflated via a sealable passage 13. A valve 14 may be positioned in or may be part of the sealable passage 13 so that the inflation structure 11 can be inflated or deflated in a controlled manner. The valve 14 may be located at the centre of the inflatable component 10 or at any other position at a top surface of the inflatable component 10.

The valve 14 may be operated manually, e.g. by the help of an attached string or wire 20 or similar means attached to an open/close handle of the valve 14.

The inflation structure 11 is dimensioned to provide a thermal and/or physical barrier in respect of external fluids and/or physical objects or particles acting upon the inflation structure 11 in case the inflation structure 11 is inflated and inserted in a hollow section 3 of the wind turbine module 1. Thus a temperature T1 inside the blade 1 may be different to a temperature T2 outside of the blade 1.

As particularly highlighted in FIG.2, but also shown in FIG.1, the inflatable component 10 is sized and shaped to fit the hollow section 3 of the blade 1 such that, in case the inflation structure 11 is inflated and inserted in the hollow root section 3 of the wind turbine module 1, a first surface structure 15 of the inflatable component 10 and a second surface structure 16 of the hollow section 3 of the wind turbine module 1 are in fluid tight contact to limit or block a fluid leakage in between. By this the inflatable component 10 acts as a temperature barrier. Furthermore this provides stability of the inflatable component 10. Wind, air, snow, or dust is also properly blocked from entering the hollow inside of the blade 1.

Further it is shown that the inflatable component 10 comprises a plurality of securing members 17 via which the inflatable component 10 is positioned and held in place in case the inflation structure 11 is inflated and inserted in a hollow root section 3 of the blade 1. The securing members 17 may be straps to which cables, ropes, or wires 18 can be connected. The other ends of these cables, ropes, or wires 18 may be fasted to hooks 19 and connected to the blade 1 or another solid structure, like a vessel on which the blade 1 is positioned.

By this fastening it can be guaranteed that the inflatable component 10 remains in position, even if the blade 1 is positioned vertically.

As a variant of FIG.2, FIG.3 illustrates a double shell structure of the inflatable component 10. The air tight shell 12 comprises an air tight inner shell 12a and an outer shell 12b surrounding the inner shell 12a, the outer shell 12b being of a material to protect against puncture of the inner shell 12a. The double shell structure provides additional protection in respect of puncturing the air filled compartment.

FIG.4 illustrates in a cross sectional view a multi compartment structure of the inflatable component 10. The air tight shell 12 is built of several air compartments as illustrated via air tight inner shells 12a1, 12a2, 12a3, each having individually a sealable passage 13 and a valve 14. All air tight inner shells are surrounded by a joint outer shell 12b.

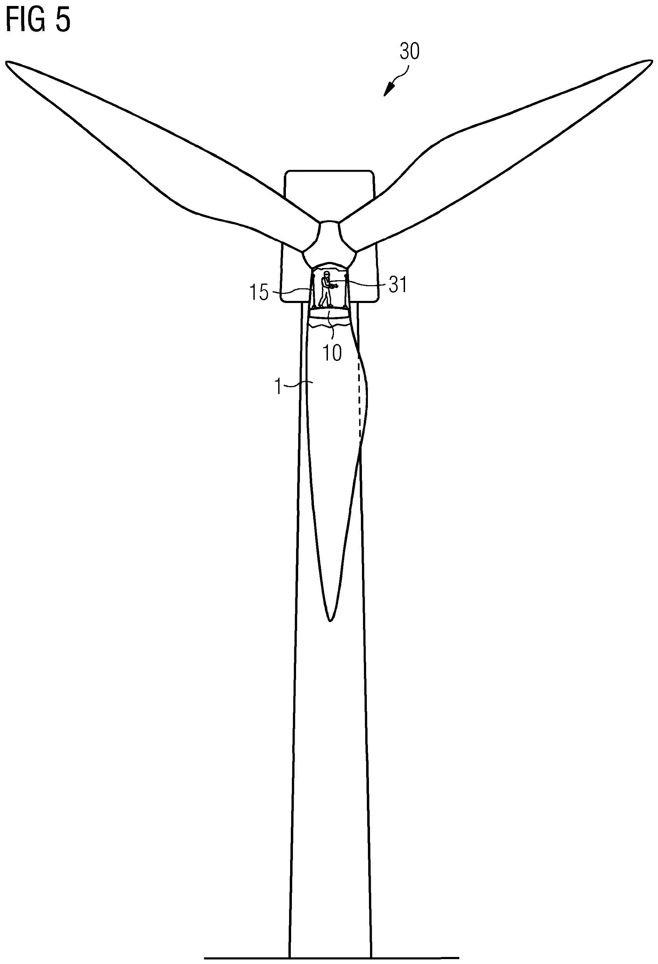

FIG.5 shows schematically a three bladed wind turbine 30 in which an inflatable component 10 is inserted for service work. The solution may also work for wind turbines with a different number of blades.

In the illustration one blade 1 is placed in a substantially vertical position where the service technician 31 may work inside the blade 1. The inflatable component 10 has been inserted, secured via cables, ropes, or wires 18, and inflated. The service technician 31 may use the inflatable component 10 as a working platform or the inflatable component 10 may only be placed inside the blade 1 below the service technician preventing dust and tools from entering the blade 1 below the service technician 31.

FIG.5 shows an example in which the blade 1 as to be serviced wind turbine module remains connected and installed. Alternatively the blade 1 could be detached and hanging vertically from a crane or similar solution.

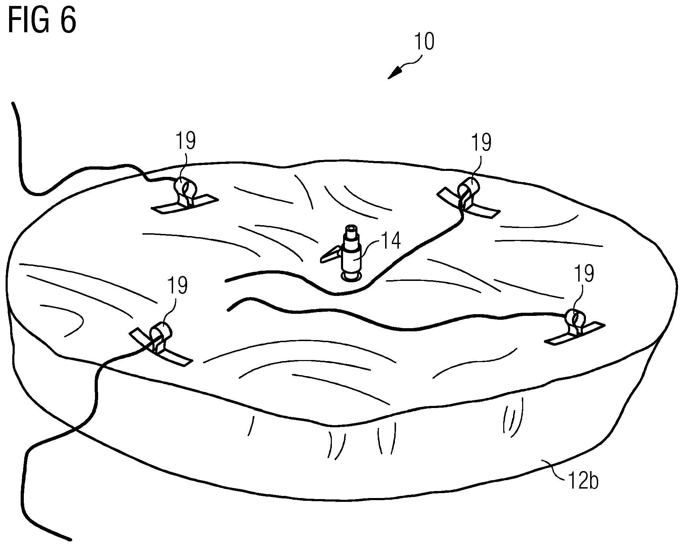

FIG. 6 shows schematically a semi inflated inflatable component 10 which is not yet installed in the wind turbine module or in the blade 1. The valve 14 can be seen and the outer shell 12b. Also hooks 19 are indicated which may be built from a soft fabric.

The valve 14 may arranged to have a hose installed. Additionally or alternatively, the valve 14 may be designed as pressure valve to secure pressure.

The discussed solution according to the figures tackles the following technical issues, which are explained for blades but apply also to other wind turbine modules in a similar fashion:
1) During blade repair work performed on a jack-up vessel onto which blades may be arranged horizontally or any work with the blade in horizontal position, there is the need to control the temperature inside the blade to be able to perform the work in controlled environment. Potential risk from wind, water, snow, etc. could cause problem to the repair, service, or installation process. This is solved via the inflatable component, as this element will be blown up and by this it will fill the open area inside the blade. Thus it prevents wind, rain, etc. to pass further into the blade. A heating solution can optionally be installed inside to add speed to the process of getting right temperature to repair blade.

Another component of a wind turbine with substantially a horizontal orientation would be the nacelle or the hub, into which the inflatable component could be inserted in the same way.
2) The discussed solution prevents further any parts from dropping into the blade during a process for work when the blade being oriented vertically. It prevents any loose parts as well as dust created during previous operation of the wind turbine to enter the blade, which would otherwise create the potential risk of stopping drain hole or being stuck in the blade creating damages when the wind turbine generator is being restarted. This is solved as the inflatable component, when being inflated, seals off around the inside of the blade. It protects that any parts or dusts, etc. could proceed further down into the blade. This is possible as these parts will lay at the side of the inflatable component so that these can be removed or collected easily.

3) The inflatable component additionally operates as a safety device for the technicians when working inside the blade when in vertical position. When being attached to secured points the inflatable component can work as a floor for the technicians to step on or just as a back-up when hanging in a rope system.

Without explicit illustration further advantages and configurations will be explained in the following.

The inflatable component consists of an inflatable system being able to reliably stop wind and heavy rain inside a blade being worked on at ground level, and/or a solution to stop anything from being inserted by fall or drop into the blade during vertical work on the blade, this being both related to tools and manpower as the inflatable component in this solution being attached to approved point in hub and/or nacelle and preferably being able to hold the load of any components etc. with the load from 0 to 136 kg or more, e.g. 200 kg or 500 kg or more, depending on the inflatable platform material, thickness and the inflatable air pressure as well as anchor points etc. The inflatable component acting as a stopper can be used as a floor in combination with rope systems which are used by the technicians as the primary solution to be secured.

Time for inflate the inflation structure may preferably being less than 10 minutes depending on equipment available, so cost and timewise it would be able to include the use of the inflatable component in existing working process.

## Claims

1. Inflatable component (10) usable during service and/or installation of a wind turbine module (1), wherein the wind turbine module is a wind turbine blade, the inflatable component (10) comprising
an inflation structure (11) with an air tight shell (12) and
a sealable passage (13) in the inflation structure (11) for ingress or discharge of air into or from the air tight shell (11) for inflating or deflating the inflation structure (11),
wherein the inflation structure (11) is dimensioned to provide a thermal and/or physical barrier in respect of external fluids and/or physical objects or particles acting upon the inflation structure (11) in case the inflation structure (11) is inflated and inserted in a hollow section (3) of the wind turbine module (1),
wherein the inflatable component (10) is configured to provide a working platform for persons in case the inflation structure (11) is inflated, inserted in the hollow section (3), and arranged horizontally, and
wherein the inflatable component (10) is built substantially from a deformable material.

2. Inflatable component (10) according to claim 1, **characterised in that** the air tight shell (12) comprises an air tight inner shell (12a) and an outer shell (12b) surrounding the inner shell (12a), the outer shell (12b) being of a material to protect against puncture of the inner shell (12a).

3. Inflatable component (10) according to claim 1 or 2, **characterised in that** the inflatable component (10) is sized and shaped to fit the hollow section (3) of the wind turbine module (1) such that, in case the inflation structure (11) is inflated and inserted in a hollow section (3) of the wind turbine module (1), a first surface structure (15) of the inflatable component (10) and a second surface structure (16) of the hollow section (3) of the wind turbine module (1) are in fluid tight contact to limit or block a fluid leakage in between.

4. Inflatable component (10) according to one of the preceding claims, **characterised in that** the air tight shell (12) is built of several air compartments.

5. Inflatable component (10) according to one of the preceding claims, **characterised in that** the inflatable component (10) further comprises a plurality of securing members (17) via which the inflatable component (10) is positioned and held in place in case the inflation structure (11) is inflated and inserted in a hollow section (3) of the wind turbine module (1).

6. Inflatable component (10) according to one of the preceding claims, **characterised in that** the sealable passage (13) in the inflation structure (11) is arranged as one or several valves (14).

7. Inflatable component (10) according to one of the preceding claims, **characterised in that** the inflatable component (10) is a portable component in case the inflation structure (11) is deflated.

8. Wind turbine arrangement (30) comprising a wind turbine tower, a wind turbine hub, a wind turbine nacelle, an inflatable component (10) according to one of the preceding claims, and the wind turbine blade (1),
wherein the inflatable component (10) is positioned and inflated inside the hollow section (3) of the wind turbine blade (1) for service and/or installation of the wind turbine blade.

9. Servicing or installation method of a wind turbine blade of a wind turbine arrangement (30) according to claim 8, comprising the steps of:
(a) inserting an inflatable component (10) into the hollow section, the inflatable component (10) comprising an inflation structure (11) with an air tight shell (12) and a sealable passage (13) in the inflation structure (11) for ingress or discharge of air into or from the air tight shell (12) for inflating or deflating the inflation structure (11), wherein the inflatable component (10) is built substantially from a deformable material; and
(b) inflating the inflatable structure such that it forms a thermal and/or physical barrier in respect of external fluids and/or physical objects or particles acting upon the inflation structure (11).

10. Servicing or installation method according to claim 9, comprising, before step (a), the further steps of:
(a1) decoupling the wind turbine blade from a wind turbine installation; and
(a2) orienting the wind turbine blade in horizontal orientation;
wherein step (a) is performed while orienting the inflatable component (10) vertically inside the hollow section (3), such that the inflatable component (10) provides the barrier for a horizontal movement of the external fluid or of the external physical objects or particles.

11. Servicing or installation method according to claim 9, comprising, before step (a), the further steps of:
(a1) decoupling the wind turbine blade from a wind turbine installation; and
(a2) orienting the wind turbine blade in vertical orientation;
wherein step (a) is performed while orienting the inflatable component (10) horizontally inside the hollow section (3), such that the inflatable component (10) provides the barrier for a vertical movement of the external fluid or of the external physical objects or particles.

12. Servicing or installation method according to any one of the claims 9 to 11, **characterised in that** during step (a) the inflatable component (10) is connected by strings and/or wires to the wind turbine blade.

13. Servicing or installation method according to any one of the claims 9 to 12, comprising the further step of:
(c) applying heat inside the wind turbine blade.

## Patentansprüche

1. Aufblasbare Komponente (10), die während der Wartung und/oder Installation eines Windturbinenmoduls (1) verwendbar ist, wobei das Windturbinenmodul ein Windturbinenflügel ist, wobei die aufblasbare Komponente (10) Folgendes umfasst:
eine Aufblasstruktur (11) mit einem luftdichten Mantel (12) und einen abdichtfähigen Durchgang (13) in der Aufblasstruktur (11) zum Eintritt oder Austritt von Luft in den oder aus dem luftdichten Mantel (11) zum Aufblasen oder Ablassen der Aufblasstruktur (11),
wobei die Aufblasstruktur (11) so dimensioniert ist, dass eine thermische und/oder physische Barriere in Bezug auf äußere Fluide und/oder physische Objekte oder Partikel bereitgestellt wird, die auf die Aufblasstruktur (11) einwirken, falls die Aufblasstruktur (11) aufgeblasen und in ein hohles Segment (3) des Windturbinenmoduls (1) eingeführt wird,
wobei die aufblasbare Komponente (10) ausgestaltet ist, um eine Arbeitsplattform für Personen in dem Fall bereitzustellen, dass die Aufblasstruktur (11) aufgeblasen, in ein hohles Segment (3) eingeführt und horizontal angeordnet ist, und
wobei die aufblasbare Komponente (10) im Wesentlichen aus einem verformbaren Material gebaut ist.

2. Aufblasbare Komponente (10) nach Anspruch 1,
**dadurch gekennzeichnet, dass**
der luftdichte Mantel (12) einen luftdichten Innenmantel (12a) und einen Außenmantel (12b) umfasst, der den Innenmantel (12a) umgibt, wobei der Außenmantel (12b) aus einem Material ist, um den Innenmantel (12a) vor Durchstich zu schützen.

3. Aufblasbare Komponente (10) nach Anspruch 1 oder 2,
**dadurch gekennzeichnet, dass**
die aufblasbare Komponente (10) so bemessen und geformt ist, dass sie in das hohle Segment (3) des Windturbinenmoduls (1) passt, so dass, falls die Aufblasstruktur (11) aufgeblasen und in das hohle Segment (3) des Windturbinenmoduls (1) eingeführt wird, eine erste Oberflächenstruktur (15) der aufblasbaren Komponente (10) und eine zweite Oberflächenstruktur (16) des hohlen Segments (3) des Windturbinenmoduls (1) in fluiddichtem Kontakt sind, um Fluidleckage zwischen ihnen zu begrenzen oder zu blockieren.

4. Aufblasbare Komponente (10) nach einem der vorhergehenden Ansprüche,
**dadurch gekennzeichnet, dass**
der luftdichte Mantel (12) aus mehreren Luftkammern gebaut ist.

5. Aufblasbare Komponente (10) nach einem der vorhergehenden Ansprüche,
**dadurch gekennzeichnet, dass**
die aufblasbare Komponente (10) des Weiteren eine Vielzahl von Sicherungselementen (17) umfasst, mittels derer die aufblasbare Komponente (10) positioniert und in Ort und Stelle gehalten wird, falls die Aufblasstruktur (11) aufgeblasen und in ein hohles Segment (3) des Windturbinenmoduls (1) eingeführt wird.

6. Aufblasbare Komponente (10) nach einem der vorhergehenden Ansprüche,
**dadurch gekennzeichnet, dass**
der abdichtfähige Durchgang (13) in der Aufblasstruktur (11) als ein oder mehrere Ventile (14) angeordnet ist.

7. Aufblasbare Komponente (10) nach einem der vorhergehenden Ansprüche,
**dadurch gekennzeichnet, dass**
die aufblasbare Komponente (10) eine tragbare Komponente ist, falls die Aufblasstruktur (11) abgelassen ist.

8. Windturbinenanordnung (30), umfassend einen Windturbinenturm, eine Windturbinennabe, eine Windturbinengondel, eine aufblasbare Komponente (10) nach einem der vorhergehenden Ansprüche und den Windturbinenflügel (1),
wobei die aufblasbare Komponente (10) zur Wartung und/oder Installation des Windturbinenflügels in dem hohlen Segment (3) des Windturbinenflügels (1) positioniert und aufgeblasen wird.

9. Wartungs- oder Installationsverfahren eines Windturbinenflügels einer Windturbinenanordnung (30) nach Anspruch 8, umfassend die Schritte:
(a) Einführen einer aufblasbaren Komponente (10) in das hohle Segment, wobei die aufblasbare Komponente (10) eine Aufblasstruktur (11) mit einem luftdichten Mantel (12) und einem abdichtfähigen Durchgang (13) in der Aufblasstruktur (11) zum Eintritt oder Austritt von Luft in den oder aus dem luftdichten Mantel (12) umfasst, um die Aufblasstruktur (11) aufzublasen oder abzulassen, wobei die aufblasbare Komponente (10) im Wesentlichen aus einem verformbaren Material gebaut ist; und
(b) Aufblasen der aufblasbaren Struktur, so dass sie eine thermische und/oder physische Barriere in Bezug auf äußere Fluide und/oder physische Objekte oder Partikel bildet, die auf die Aufblasstruktur (11) einwirken.

10. Wartungs- oder Installationsverfahren nach Anspruch 9, umfassend vor Schritt (a) die weiteren Schritte:
(a1) Entkoppeln des Windturbinenflügels von einer Windturbineninstallation; und
(a2) Orientieren des Windturbinenflügels in horizontaler Orientierung;
wobei Schritt (a) durchgeführt wird, während die aufblasbare Komponente (10) vertikal innerhalb des hohlen Segments (3) orientiert wird, so dass die aufblasbare Komponente (10) die Barriere für eine horizontale Bewegung des äußeren Fluids oder äußerer physischer Objekte oder Partikel bereitstellt.

11. Wartungs- oder Installationsverfahren nach Anspruch 9, umfassend vor Schritt (a) die weiteren Schritte:
(a1) Entkoppeln des Windturbinenflügels von einer Windturbineninstallation; und
(a2) Orientieren des Windturbinenflügels in vertikaler Orientierung;
wobei Schritt (a) durchgeführt wird, während die aufblasbare Komponente (10) horizontal innerhalb des hohlen Segments (3) orientiert wird, so dass die aufblasbare Komponente (10) die Barriere für eine vertikale Bewegung des äußeren Fluids oder äußerer physischer Objekte oder Partikel bereitstellt.

12. Wartungs- oder Installationsverfahren nach einem der Ansprüche 9 bis 11, **dadurch gekennzeichnet, dass** während Schritt (a) die aufblasbare Komponente (10) durch Seile und/oder Drähte mit dem Windturbinenflügel verbunden ist.

13. Wartungs- oder Installationsverfahren nach einem der Ansprüche 9 bis 12, umfassend den weiteren Schritt:
(c) Anwenden von Wärme innerhalb des Windturbinenflügels.

## Revendications

1. Composant gonflable (10) pouvant être utilisé lors de l'entretien et/ou de l'installation d'un module d'éolienne (1), dans lequel le module d'éolienne est une pale d'éolienne, le composant gonflable (10) comprenant
une structure de gonflage (11) avec une coque étanche à l'air (12) et
un passage pouvant être scellé (13) dans la structure de gonflage (11) pour l'entrée ou la sortie de l'air dans, ou à partir depuis, la coque étanche à l'air (11) pour gonfler ou dégonfler la structure de gonflage (11),
dans lequel la structure de gonflage (11) est dimensionnée pour fournir une barrière thermique et/ou physique par rapport à des fluides externes et/ou des objets ou des particules physiques agissant sur la structure de gonflage (11) au cas où la structure de gonflage (11) est gonflée et insérée dans une section creuse (3) du module d'éolienne (1)
dans lequel le composant gonflable (10) est configuré pour fournir une plateforme de travail pour des personnes au cas où la structure de gonflage (11) est gonflée, insérée dans la section creuse (3) et agencée horizontalement, et
dans lequel le composant gonflable (10) est essentiellement fait d'un matériau déformable.

2. Composant gonflable (10) selon la revendication 1, **caractérisé en ce que** la coque étanche à l'air (12) comprend une coque interne (12a) étanche à l'air et une coque externe (12b) entourant la coque interne (12a), la coque externe (12b) étant faite d'un matériau qui protège la coque interne (12a) des perforations.

3. Composant gonflable (10) selon la revendication 1 ou 2, **caractérisé en ce que** le composant gonflable (10) est dimensionné et façonné pour tenir dans la section creuse (3) du module d'éolienne (1) de manière que, dans le cas où la structure de gonflage (11) est gonflée et insérée dans une section creuse (3) du module d'éolienne (1), une première structure de surface (15) du composant gonflable (10) et une seconde structure de surface (16) de la section creuse (3) du module d'éolienne (1) sont en contact étanche aux fluides pour limiter ou bloquer une fuite de fluide entre les deux.

4. Composant gonflable (10) selon l'une des revendications précédentes, **caractérisé en ce que** la coque étanche à l'air (12) est constituée de plusieurs compartiments d'air.

5. Composant gonflable (10) selon l'une des revendications précédentes, **caractérisé en ce que** le composant gonflable (10) comprend en outre une pluralité d'éléments de fixation (17) *via* lesquels le composant gonflable (10) est positionné et maintenu en place dans le cas où la structure de gonflage (11) est gonflée et insérée dans une section creuse (3) du module d'éolienne (1).

6. Composant gonflable (10) selon l'une des revendications précédentes, **caractérisé en ce que** le passage pouvant être scellé (13) dans la structure de gonflage (11) est réparti en une ou plusieurs vannes (14).

7. Composant gonflable (10) selon l'une des revendications précédentes, **caractérisé en ce que** le composant gonflable (10) est un composant portatif au cas où la structure de gonflage (11) est dégonflée.

8. Agencement d'éolienne (30) comprenant un mât d'éolienne, un moyeu d'éolienne, une nacelle d'éolienne, un composant gonflable (10) selon l'une des revendications précédentes, et la pale d'éolienne (1),
dans lequel le composant gonflable (10) est positionné et gonflé à l'intérieur de la section creuse (3) de la pale d'éolienne (1) pour l'entretien et/ou l'installation de la pale d'éolienne (1).

9. Procédé d'entretien ou d'installation d'une pale d'éolienne de l'agencement d'éolienne (30) selon la revendication 8, comprenant les étapes :
(a) d'insertion d'un composant gonflable (10) dans la section creuse, le composant gonflable (10) comprenant une structure de gonflage (11) avec une coque étanche à l'air (12) et un passage pouvant être scellé (13) dans la structure de gonflage (11) pour l'entrée ou la sortie de l'air dans ou depuis la coque étanche à l'air (12) pour gonfler ou dégonfler la structure de gonflage (11), dans lequel le composant gonflable (10) est construit essentiellement à partir d'un matériau déformable ; et
(b) de gonflage de la structure de gonflage de manière qu'il se forme une barrière thermique et/ou physique par rapport à des fluides externes et/ou des objets ou des particules physiques agissant sur la structure de gonflage (11).

10. Procédé d'entretien ou d'installation selon la revendication 9, comprenant, avant l'étape (a), les étapes supplémentaires :
(a1) de découplage de la pale d'éolienne d'une installation d'éolienne ; et
(a2) d'orientation de la pale d'éolienne dans une orientation horizontale ;
dans lequel l'étape (a) est effectuée tout en orientant le composant gonflable (10) verticalement à l'intérieur de la section creuse (3), de manière que le composant gonflable (10) fournit la barrière à un mouvement horizontal du fluide externe ou des objets ou des particules physiques externes.

11. Procédé d'entretien ou d'installation selon la revendication 9, comprenant, avant l'étape (a), les étapes supplémentaires :
(a1) de découplage de la pale d'éolienne d'une installation d'éolienne ; et
(a2) d'orientation de la pale d'éolienne dans une orientation verticale ;
dans lequel l'étape (a) est effectuée tout en orientant le composant gonflable (10) horizontalement à l'intérieur de la section creuse (3), de manière que le composant gonflable (10) fournit la barrière à un mouvement vertical du fluide externe ou des objets ou des particules physiques externes.

12. Procédé d'entretien ou d'installation selon l'une quelconque des revendications 9 à 11,
**caractérisé en ce que** lors de l'étape (a) le composant gonflable (10) est raccordé par des cordes et/ou des fils à la pale d'éolienne.

13. Procédé d'entretien ou d'installation selon l'une quelconque des revendications 9 à 12, comprenant l'étape supplémentaire :
(c) d'application de chaleur à l'intérieur de la pale d'éolienne.
